# EUROPEAN PATENT APPLICATION

(11) **EP 4 411 608 A1**
(43) Date of publication of application: **07.08.2024**
(21) Application number: 23154351.3
(22) Date of filing: 31.01.2023
(51) Int. Cl.: G06Q 10/04, G06Q 10/08

(54) **AN ENVIRONMENTAL IMPACT MONITORING SYSTEM AND METHOD THEREIN FOR ESTIMATING AN ENVIRONMENTAL IMPACT OF TRANSPORTING ITEMS OF GOODS**

(71) Applicant: VOLVO TRUCK CORPORATION, 405 08 Göteborg (SE)
(72) Inventor: THORMAN, Mikael, 417 42 Göteborg (SE); HUMLEFJÄLL, Mathias, 429 32 Kullavik (SE); ÅGREN, Henrik, 411 19 Göteborg (SE); KLEIMARK, Charlotte, 431 66 MÖLNDAL (SE)
(74) Representative: Zacco Sweden AB

(57) **Abstract**

An environmental impact monitoring system and method therein for estimating an environmental impact of transporting items of goods is described. It describes determining an environmental impact associated with each of a number of items of goods for a corresponding transport of said item of goods. It also describes obtaining a first set of variable environmental transport factors which impacted the total energy consumption by the vehicle whilst carrying out each of the corresponding transports. It further describes estimating an environmental impact associated with a subsequent item of goods for an upcoming transport of said subsequent item of goods based on the determined environmental impacts and the obtained first set of variable environmental transport factors. Computer program products and storage mediums are also described.

## Description

### TECHNICAL FIELD

The disclosure relates generally to environmental impact management. In particular aspects, the disclosure relates to an environmental impact monitoring system and method therein for estimating an environmental impact of transporting items of goods. In further aspects, the disclosure also relates to computer program products for performing the method and storage mediums. Although the disclosure may be described with respect to a particular vehicle, the disclosure is not restricted to any particular vehicle.

### BACKGROUND

As goods are being transported as part of a transport assignment or mission for a freight, trucking or transport vehicle, there are many different stakeholders involved in getting each of the items of goods from its origin to its destination. A transport buyer, such as, e.g. business-to-consumer, B2C, company, may order its items of goods to be transported from a warehouse or factory to its local storage facility or local store as part of a transport assignment or mission. The order may be given to a transport or carrier service company, which may have a mixed transport fleet of transportation vehicles and/or one or more sub-contractors or smaller transport firms that each operates their own vehicle(s) or mixed transport fleets. Mixed transport fleet of transportation vehicles may here refer to various vehicles, such as, e.g. trucks or smaller cargo transport vehicles, from various different brands having different means of fuel/energy propulsion, thus resulting in different environmental impacts for similar operations.

As there are increasing demands on companies today to demonstrate their environmental or CO₂ footprint all the way down to each specific item being purchased by the end consumer, there is also an increasing demand to more accurately predict or estimate the environmental impact of the transportation of each item of goods from its source of origin to its final end consumer location. However, in view of the many stakeholders involved in transporting a specific item of goods from one destination to another, there is often a lack of data and granularity that allows for any type of disaggregation, as well as, standard estimations and unknown variances used when assessing the environmental impact of the transportation of goods. Hence, there is a need to improve the monitoring of the environmental impact caused by transported goods. Furthermore, there is also a need to be able to estimate and provide accurate information regarding the environmental impact for future transports of goods.

### SUMMARY

According to a first aspect of the embodiments herein, a computer-implemented method for estimating an environmental impact of transporting items of goods is described. The method comprise determining an environmental impact associated with each of a number of items of goods for a corresponding transport of said item of goods, wherein each environmental impact is based on a part of a total energy consumption of a vehicle for the corresponding transport that has been assigned to said item of goods, and wherein the total energy consumption for each of the corresponding transports are measured by the vehicle whilst carrying out the corresponding transports. The method also comprise obtaining a first set of variable environmental transport factors which impacted the total energy consumption by the vehicle whilst carrying out each of the corresponding transports. Further, the method comprise estimating an environmental impact associated with a subsequent item of goods for an upcoming transport of said subsequent item of goods based on the determined environmental impacts and the obtained first set of variable environmental transport factors.

The first aspect of the disclosure may seek to provide computer implemented method for estimating the environmental impact of an item of good to be transported that seeks to mitigate, alleviate, or eliminate all or at least some of the above-discussed drawbacks of presently known solutions. By determining an environmental impact of each transported item of goods based on an individually assigned part of the actual measured energy consumption of the vehicle for the transportations of the items of goods, and simultaneously gathering information/data of variable environmental transport factors that the vehicle was subjected to when carrying out each of the corresponding transports and thus had an impact on the total energy consumption by the vehicle for each of the corresponding transports, a technical benefit may include that this information, which both enables accurate and fair estimations of each transported item's relative environmental impact, as well as, actual environmental circumstances affecting each transport, may be used to estimate or predict the environmental impacts of upcoming transports of subsequent item of goods. This may then, for example, be presented to an operator ordering a transport assignment from carrier service. For example, an operator about to order a transport assignment for an upcoming transport of an item of goods may thus be presented with an accurate and fair estimation of environmental impact of the transport based on corresponding previous transport and environmental circumstances. Hence, estimation and provision of accurate environmental impacts for future transports of goods is improved.

In some embodiments, the method may comprise obtaining a second set of variable environmental transport factors which is estimated to impact the total energy consumption by a vehicle whilst carrying out the upcoming transport of said subsequent item of goods. Here, the method may also comprise estimating the environmental impact associated with the subsequent item of goods for the upcoming transport of said subsequent item of goods further based on the obtained second set of variable environmental transport factors. Here, a technical benefit may include that current status for the variable environmental transport factors affecting an upcoming transport of an item of goods may be taken into account when estimating or predicting the environmental impacts of upcoming transports of subsequent item of goods; further improving estimation and provision of accurate environmental impacts for the future transport. For example, information regarding the current weather situation may be used to match with previous transports performed during similar weather situations in order to estimate or predict the environmental impact of the upcoming transport.

In some embodiments, the method may further comprise providing the estimated environmental impact associated with the subsequent item of goods for the upcoming transport of said subsequent item of goods to a user of a transportation ordering system. In this case, a technical benefit may include enabling a user to be provided with the accurate environmental impact for a transport of an item of good; thus enabling an improved possibility of making a more conscious and more environmentally sound choice for the transportation of an item of good.

In some embodiments, the method may further comprise estimating one or more alternative environmental impacts associated with the subsequent item of goods for the upcoming transport of said subsequent item of goods based on the determined environmental impacts, the obtained first set of variable environmental transport factors, and the obtained second set of variable environmental transport factors, whereby said alternative environmental impacts is conditional on one or more transport restrictions or transport options for the upcoming transport of said subsequent item of goods. In this case, a technical benefit may include enabling a user to be provided with a proactive transport choice that is estimated to lower the environmental impact for the transport of the item of good. In this case, the method may also comprise providing the estimated one or more alternative environmental impacts associated with the subsequent item of goods for the upcoming transport of said subsequent item of goods to a user of a transportation ordering system. In this case, a technical benefit may include providing a user with a proactive transport choice estimated to lower the environmental impact for the transport of the item of good.

In some embodiments, a machine learning model is trained to estimate the environmental impact and/or the one or more alternative environmental impacts associated with the subsequent item of goods for the upcoming transport of said subsequent item of goods based on the determined environmental impacts, the obtained first set of variable environmental transport factors, and the obtained second set of variable environmental transport factors. Hence, in subsequent operation, the determined environmental impacts, the obtained first set of variable environmental transport factors, and the obtained second set of variable environmental transport factors may, for example, be used as input to the AI/ML algorithm, whereby the output of the AI/ML algorithm may be an estimate of the environmental impact and/or the one or more alternative environmental impacts associated with the subsequent item of goods for the upcoming transport of said subsequent item of goods. In this case, a technical benefit may include further improved accuracy of the estimations of the environmental impacts for future transports.

In some embodiments, the first and second set of variable environmental transport factors comprise one or more of: one or more geography or topography factors relating to the route travelled by the vehicle whilst carrying out each of the corresponding transports, an amount of traffic on the route travelled by the vehicle whilst carrying out each of the corresponding transports, one or more factors relating to the current weather on the route travelled by the vehicle whilst carrying out each of the corresponding transports, and one or more factors related to the timing or date whilst carrying out each of the corresponding transports. In this case, a technical benefit may include that different estimations may be obtained based on, for example, where the upcoming transport is to take place (i.e. geographic location of the route), the terrain of the route, at which height above sea-level the route is located, etc. Another benefit may include that different estimations may be obtained based on, for example, whether there is no traffic or traffic congestion on the route. A further benefit may include that different estimations may be obtained based on, for example, the current versus past weather situations or temperatures. Furthermore, a benefit may include that different estimations may be obtained based on, for example, in case there is a holiday at the time and date of the transport. Here, other time and date considerations may involve weekends versus weekdays (e.g. Saturday/Sunday versus Monday-Friday), between different weekdays (e.g. Monday vs Tuesday), or seasonal variations (e.g. winter, spring, summer or fall), etc.

In some embodiments, the environmental impact may be represented by a carbon-dioxide, CO₂, or carbon-dioxide equivalent, CO₂e, indicator or emissions value. A technical benefit may include that a well-defined and commonly relatable measurement of the environmental impact may be established and assigned.

According to a second aspect of the embodiments herein, an environmental impact monitoring system for estimating an environmental impact of transporting items of goods is described. The system comprises a processing circuitry and a memory. The processing circuitry is configured to determine an environmental impact associated with each of a number of items of goods for a corresponding transport of said item of goods, wherein each environmental impact is based on a part of a total energy consumption of a vehicle for the corresponding transport that has been assigned to said item of goods, and wherein the total energy consumption for each of the corresponding transports are measured by the vehicle whilst carrying out the corresponding transports. The processing circuitry is also configured to obtain a first set of variable environmental transport factors which impacted the total energy consumption by the vehicle whilst carrying out each of the corresponding transports. Further, the processing circuitry is configured to estimate an environmental impact associated with a subsequent item of goods for an upcoming transport of said subsequent item of goods based on the determined environmental impacts and the obtained first set of variable environmental transport factors.

In some embodiments, the processing circuitry may further be configured to obtain a second set of variable environmental transport factors which will impact the total energy consumption by a vehicle whilst carrying out the upcoming transport of said subsequent item of goods. Here, the processing circuitry may also be configured to estimate the environmental impact associated with the subsequent item of goods for the upcoming transport of said subsequent item of goods further based on the obtained second set of variable environmental transport factors.

In some embodiments, the processing circuitry may further be configured to provide the estimated environmental impact associated with the subsequent item of goods for the upcoming transport of said subsequent item of goods to a user of a transportation ordering system.

According to some embodiments, the processing circuitry may further be configured to estimate one or more alternative environmental impacts associated with the subsequent item of goods for the upcoming transport of said subsequent item of goods based on the determined environmental impacts, the obtained first set of variable environmental transport factors, and the obtained second set of variable environmental transport factors, whereby said alternative environmental impacts is conditional on one or more transport restrictions or transport options for the upcoming transport of said subsequent item of goods. Further, in this case, the processing circuitry may, according to some embodiments, further be configured to provide the estimated one or more alternative environmental impacts associated with the subsequent item of goods for the upcoming transport of said subsequent item of goods to a user of a transportation ordering system.

In some embodiments, the processing circuitry may further be configured with a machine learning model that is trained to estimate the environmental impact and/or the one or more alternative environmental impacts associated with the subsequent item of goods for the upcoming transport of said subsequent item of goods based on the determined environmental impacts, the obtained first set of variable environmental transport factors, and the obtained second set of variable environmental transport factors.

Effects and advantages of this second aspect is to a large extent analogous to those described above in connection with the first aspect

According to a third aspect of the embodiments herein, a computer program product comprising program code means for performing the steps of the methods described above when said program is run on a processing circuitry of a network system or a processing circuitry of a user device, respectively, is described. According to a fourth aspect of the embodiments herein, a non-transitory computer-readable storage medium comprising instructions, which when executed on a processing circuitry of a network system or on a processing circuitry of a user device, cause the processing circuitry to perform the methods described above is described. Effects and advantages of the third and fourth aspects are to a large extent analogous to those described above in connection with the first and second aspect.

The above aspects, accompanying claims, and/or embodiments disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
**FIG. 1** illustrates communications system in which an environmental impact monitoring system according to some embodiments herein may be implemented.
**FIG. 2** is a schematic illustration of a route of a vehicle in accordance with a transport assignment according to some embodiments herein,
**FIG. 3** is a flowchart illustrating a method according to some embodiments,
**FIG. 4-5** are signalling diagrams illustrating a method according to some embodiments,
**FIG. 6** is schematic block diagram illustrating embodiments of an environmental impact monitoring system, and
**FIG. 7** is a schematic diagram of an exemplary computer system for implementing embodiments disclosed herein according to some embodiments.

### DETAILED DESCRIPTION

Aspects set forth below represent the necessary information to enable those skilled in the art to practice the disclosure.

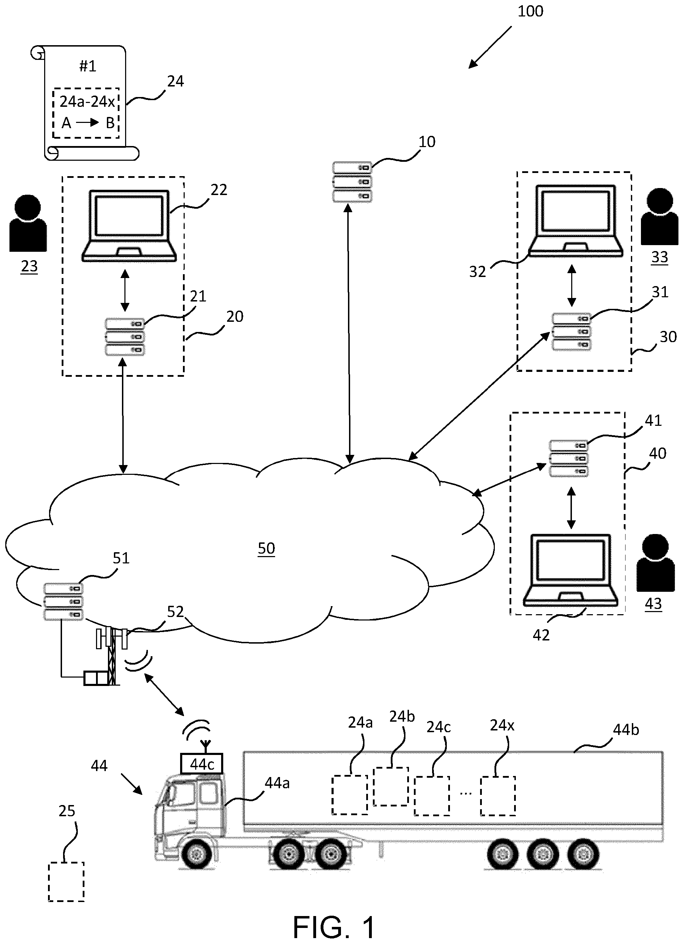

**FIG. 1** illustrates an example of a **system 100** in which an **environmental impact monitoring system 10** according to some embodiments may be implemented. The environmental impact monitoring system 10 may be configured to communicate with several different systems, such as, a transport ordering system 20, a transport assignment system 30, a transport system 40, etc., via a communications network 50, e.g. the Internet. The environmental impact monitoring system 10 may be operated on an online server and/or as a cloud service.

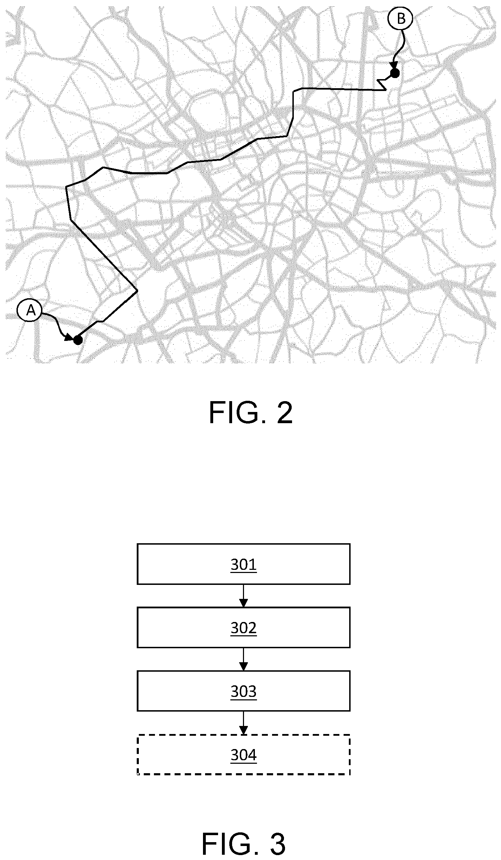

In the system, the **transport ordering system 20** is typically operated by a transport buyer, i.e. a company having a need to transport a number of items of goods from a first location to a second location and wishes to order the transportation from a carrier service. For example, an **operator 23,** such as, an employee of the transport buyer, may manually operate the transport ordering system 20 via a **user terminal 22.** The user terminal 22 may, for example, be a general purpose computer or laptop comprising a display and a keyboard. The user terminal 22, or a **server or cloud service 21** to which the user terminal 22 may be connected to and in communication with, may be configured with a transport ordering application that may be downloaded and installed from the environmental impact monitoring system 10. Optionally, the operator 23 of the transport ordering system 20 may use the user terminal 22 to enter an online transport ordering application operated by the environmental impact monitoring system 10 using a communications network 50, such as, the Internet. According to another option, information from a transport ordering application embedded in or operated by the user terminal 22, or the server or cloud service 21, may be configured to automatically be transferred to the environmental impact monitoring system 10, for example, when completing a transport assignment to a transport assignment system 30. The transport ordering application of the environmental impact monitoring system 10, or automatic information transfer to the environmental impact monitoring system 10, enable the transport ordering system 20, or operator thereof, to exchange information with the environmental impact monitoring system 10 associated with a transport assignment to a carrier service or logistics operator for the transportation of a number of items of goods from a first location to a second destination. For example, the operator 23 may enter, or automatically transfer, information regarding a **transport assignment 24** provided to a carrier service or logistics operator for transportation of a number of **items of goods 24a-24x** from a first location A to a second location B. A **first and second location A and B** and a route of a vehicle in accordance with transport assignment 24 therein between is exemplified in **Fig. 2****.**

In the system, the **transport assignment system 30** is typically operated by a carrier service or logistics operator for receiving and accepting transport assignments from a transport buyer, such as, e.g. the transport assignment 24 from the transport ordering system 20. For example, an **operator 33,** such as, an employee of the carrier service or logistics operator, may manually operate the transport assignment system 30 via a **user terminal 32.** The user terminal 32 may, for example, be a general purpose computer or laptop comprising a display and a keyboard. The user terminal 32, or a **server or cloud service 31** to which the user terminal 32 may be connected to and in communication with, may be configured with a transport assignment application that may be downloaded and installed from the environmental impact monitoring system 10. Optionally, the operator 33 of the transport assignment system 30 may use the user terminal 22 to enter an online transport assignment application of the environmental impact monitoring system 10 using the communications network 50. According to another option, information from a transport assignment application embedded in or operated by the user terminal 32, or the server or cloud service 31, may be configured to automatically be transferred to the environmental impact monitoring system 10, for example, when receiving or accepting a transport assignment from the transport ordering system 20. The transport assignment application of the environmental impact monitoring system 10, or automatic information transfer to the environmental impact monitoring system 10, may enable the transport assignment system 30, or operator thereof, to exchange information with the environmental impact monitoring system 10 associated with a transport assignment from a transport buyer for the transportation of a number of items of goods from a first location to a second destination. For example, the operator 33 may enter, or automatically transfer, information regarding a transport assignment 24 provided by a transport buyer for transportation of a number of items of goods 24a-24x from a first location A to a second location B.

In the system, the **transport system 40** is typically operated by a trucking company for receiving and accepting transport orders from the transport assignment system 30, e.g. a transport order corresponding to the transport assignment 24 from the transport ordering system 20. For example, an **operator 43,** such as, an employee of the trucking company, may manually operate the transport system 40 via a **user terminal 42.** The user terminal 42 may, for example, be a general purpose computer or laptop comprising a display and a keyboard. In some embodiments, the user terminal 42, or a **server or cloud service 41** to which the user terminal 42 may be connected to and in communication with, may be configured with a transport order application that may be downloaded and installed from the environmental impact monitoring system 10. Optionally, an operator 43 of the transport system 40 may use the user terminal 42 to enter an online transport order application of the environmental impact monitoring system 10 using the communications network 50. According to another option, information from a transport order application embedded in or operated by the user terminal 42, or the server or cloud service 41, may be configured to automatically be transferred to the environmental impact monitoring system 10, for example, upon and after receiving the transport order from the transport assignment system 30. The transport order application of the environmental impact monitoring system 10, or automatic information transfer to the environmental impact monitoring system 10, may enable the transport system 40, or operator thereof, to exchange information with the environmental impact monitoring system 10 associated with a transport assignment from a transport buyer for the transportation of a number of items of goods from a first location to a second destination. For example, the operator 43 may enter, or automatically transfer, information regarding a transport order associated with the transport assignment 24 for transportation of a number of items of goods 24a-24x from a first location A to a second location B.

Here, it should be noted that the trucking company may be a sub-contractor of a carrier service or logistics operator, or be a part of an in-house trucking company of the carrier service or logistics operator. The trucking company may be operating one or more vehicles or fleet of vehicles for transporting items of goods. One example of such a vehicle is shown in Fig. 1. In this case, the **vehicle 44** is exemplified as a heavy-duty vehicle combination for cargo transport. The vehicle 44 in Fig. 1 comprises a **truck or towing vehicle 44a** configured to tow a **trailer unit 44b** in a known manner, e.g., by a fifth wheel connection. Herein, a heavy-duty vehicle is taken to be a vehicle designed for the handling and transport of heavier objects or large quantities of item of goods 24a-24x. The vehicle 44 may, for example, be one of an electric or hybrid vehicle, or possibly a gas, gasoline or diesel vehicle. The vehicle 44 may comprise an electric machine (in case of being an electric or hybrid vehicle) or an engine (such as an internal combustion engine in case of being a gas, gasoline or diesel vehicle). The vehicle 44 may further be manually operated, fully or semi-autonomous. Even though the embodiments herein are described mainly with respect to heavy-duty vehicles, such as, e.g. semi-trailer vehicles or trucks for cargo and goods transport, the embodiments herein should not be considered restricted to this particular type of vehicle but may also be used in other types of vehicles, such as, a car, a bus, a marine vessel, etc.

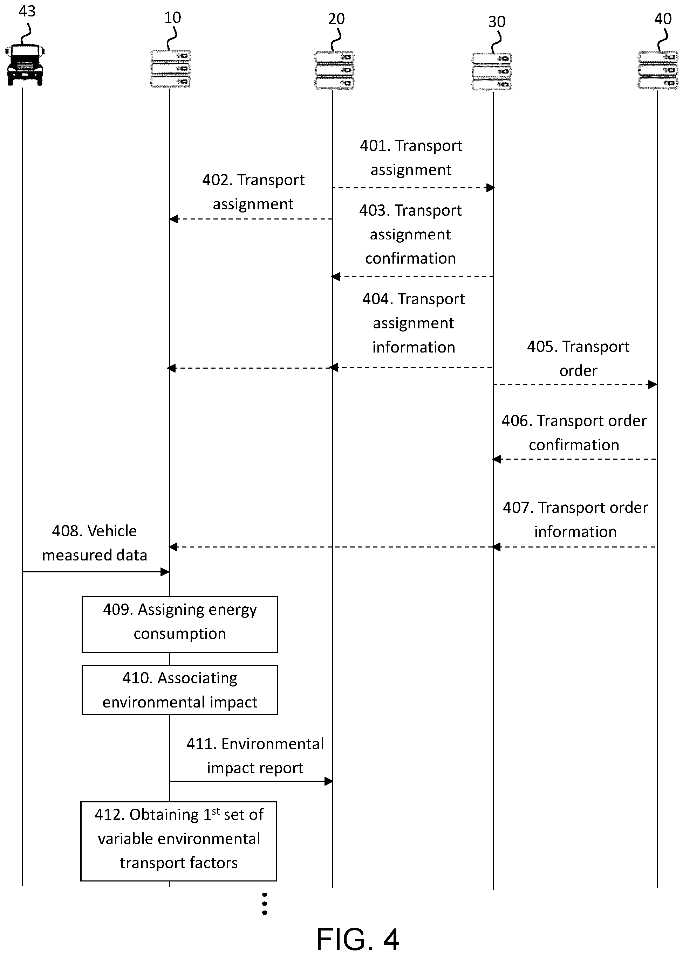

It should further be noted that each of the vehicles of the trucking company, such as, the vehicle 44, may comprise a **telecommunication or telematics device 44c.** The telecommunication or telematics device 44c may be configured to wirelessly transmit measured vehicle characteristics and operating data using the communications network 50, e.g. via a radio base station 52 connected to telecommunications network node 51 with access to the communications network 50. The vehicle characteristics and operating data, as exemplified in the embodiments below, may be transmitted by the telecommunication or telematics device 44c to the environmental impact monitoring system 10, directly or via the transport system 40. It should further be noted that although only one transport system 40 is shown in the example of Fig. 4, there may be several sub-contractors or trucking companies in turn also having sub-contractors or affiliated truckers/trucking companies associated thereto involved in delivering the transport order. Each of these may also involve one or more transport systems similar to the transport system 40. In other words, in some embodiments, there may be several transport systems sharing the delivery of the transport order with the transport system 40. In FIG. 1, there is also shown an example of a **subsequent item of goods 25** that may be the subject of a transportation assignment query that may be sent from the transport ordering system 20 to the environmental impact monitoring system 10 seeking an estimated environmental impact of an upcoming transport of the subsequent item of goods 25.

Embodiments of a computer-implemented method for estimating an environmental impact of transporting items of goods 24a-24x, will now be described with reference to the flowchart depicted in **FIG. 3.** FIG. 3 is an illustrated example of actions, steps or operations which may be performed by the environmental impact monitoring system 10 described above with reference to FIGS. 1-2. The method may comprise the following actions, steps or operations.

**Action 301.** Initially, the environmental impact monitoring system 10 determines an environmental impact associated with each of a number of items of goods 24a-24x for a corresponding transport of said item of goods 24a-24x. Here, each environmental impact is based on a part of a total energy consumption of a vehicle 43 for the corresponding transport that has been assigned to said item of goods 24a-24x, wherein the total energy consumption for each of the corresponding transports are measured by the vehicle 43 whilst carrying out the corresponding transports. This means, for example, that the environmental impact monitoring system 10 may collect a large number of environmental impact values for a large number of transports of different goods 24-24x that is based on the actual energy consumption measured by the vehicles while performing the transportations of the different goods. Thus, the collected environmental impact values will to a higher degree correspond to the real environmental impact of the transportation of the different goods 24-24x than other environmental impact estimation systems or models relying more on standard emission data or generalized assumptions on vehicle emissions.

**Action 302.** In addition to the determinations in Action 301, the environmental impact monitoring system 10 obtains a first set of variable environmental transport factors which impacted the total energy consumption by the vehicle 43 whilst carrying out each of the corresponding transports. This means, for example, that the environmental impact monitoring system 10 may further register specific facts or circumstances associated with the specific transportation of a particular item of goods 24-24x by the vehicle 43 that had an impact on the energy consumption of the vehicle 43 for the specific transportation, and thus impacted the environmental impact value associated with the transportation of the particular item om goods 24-24x.

In some embodiments, the first set of variable environmental transport factors may comprise: one or more geography or topography factors relating to the route travelled by the vehicle 43 whilst carrying out each of the corresponding transports, an amount of traffic on the route travelled by the vehicle 43 whilst carrying out each of the corresponding transports, one or more factors relating to the current weather on the route travelled by the vehicle 43 whilst carrying out each of the corresponding transports, and/or one or more factors related to the timing or date whilst carrying out each of the corresponding transports. This means, for example, that the environmental impact monitoring system 10 may register the location in which each transport took place (e.g. a specific city or other geographical area); as well as, for example, the altitude differences along the routes of each transport (e.g. there may be a small altitude difference when transporting goods in the inner city of Paris compared to big altitude differences on the rural country side in Switzerland). Also, the environmental impact monitoring system 10 may register the actual traffic situation that the vehicle 43 was travelling through along the routes of each transport (e.g. no traffic, low amount of traffic, high amount of traffic, traffic jam/congestion, etc.); as well as, for example, the actual weather situation that the vehicle 43 was travelling through along the routes of each transport (e.g. dry and sunny, wet and rainy, snowy and skiddish, etc.). Further, the environmental impact monitoring system 10 may register the time and date of each transport to determine whether the transports occurred, for example, on a holiday, on a weekend, on a certain weekday and/or during a certain season. This means that variations within these different factors may be considered by the environmental impact monitoring system 10 for the specific upcoming transportation of a subsequent item of goods 25. For example, weekends may involve more traffic versus weekdays, different weekdays may be more intense than others, or seasonal variations may occur (e.g. use of winter/summer tires), etc. All of these environmental transport factors may vary for each transport and affect the actual energy consumption of the vehicle 43 for each transport differently.

**Action 303.** As the environmental impacts associated with the transportation of the items of goods 24-24x has been determined in Action 301 and the first set of environmental transport factors has been obtained in Action 302, the environmental impact monitoring system 10 estimates an environmental impact associated with a subsequent item of goods 25 for an upcoming transport of said subsequent item of goods 25 based on the determined environmental impacts and the obtained first set of variable environmental transport factors. This means, for example, that the environmental impact monitoring system 10 may, e.g. in response to a transport assignment query from the transport ordering system 20, return an estimated environmental impact for a specific, future transportation of a subsequent item of goods 25, wherein the estimation is a fair and accurate environmental impact prediction for that particular transportation of the specific subsequent item of goods 25. This due to the fact that the actual energy consumption of the vehicle 43 is measured, as well as, that the first set of variable environmental transport factors may be used to segment and select information associated with each performed transport of item of goods 24a-24x, such that the future transportation of a subsequent item of goods 25 may be correlated and compared with the most similar performed transportations of item of goods 24a-24x; thus, also enable the most likely environmental impact for the transportation of the future transportation of a subsequent item of goods 25 to be obtained.

In some embodiments, the environmental impact monitoring system 10 may obtain a second set of variable environmental transport factors which is estimated to impact the total energy consumption by a vehicle 43 whilst carrying out the upcoming transport of said subsequent item of goods 25. This means, for example, that the environmental impact monitoring system 10 may receive specific facts or circumstances associated with the specific upcoming transportation of the subsequent item of goods 25 by a vehicle 43 that may have an impact on the energy consumption of the vehicle 43 for the specific transportation, and thus may have an impact on the environmental impact value associated with the transportation of the subsequent item om goods 25. In some embodiments, the second set of variable environmental transport factors may comprise: one or more geography or topography factors relating to the route travelled by the vehicle 43 whilst carrying out each of the corresponding transports, an amount of traffic on the route travelled by the vehicle 43 whilst carrying out each of the corresponding transports, one or more factors relating to the current weather on the route travelled by the vehicle 43 whilst carrying out each of the corresponding transports, and/or one or more factors related to the timing or date whilst carrying out each of the corresponding transports. This means, for example, that the environmental impact monitoring system 10 may register the location in which the specific upcoming transportation of a subsequent item of goods 25 is to take place (e.g. a specific city or other geographical area); as well as, for example, the altitude differences along the routes of the specific upcoming transportation of a subsequent item of goods 25 (e.g. a small or large altitude difference). Also, the environmental impact monitoring system 10 may register the current traffic situation that a vehicle most likely will be travelling through along the routes of the specific upcoming transportation of a subsequent item of goods 25 (e.g. no traffic, low amount of traffic, high amount of traffic, traffic jam/congestion, etc.); as well as, for example, the actual weather situation that a vehicle most likely will be travelling through along the routes of the specific upcoming transportation of a subsequent item of goods 25 (e.g. dry and sunny, wet and rainy, snowy and skiddish, etc.). Further, the environmental impact monitoring system 10 may register the time and date of the specific upcoming transportation of a subsequent item of goods 25 to determine whether the specific upcoming transportation is to be performed, for example, on a holiday, on a weekend, on a certain weekday and/or during a certain season. This means that variations within these different factors may be considered by the environmental impact monitoring system 10 for the specific upcoming transportation of the subsequent item of goods 25. For example, weekends may involve more traffic versus weekdays, different weekdays may be more intense than others, or seasonal variations may occur (e.g. use of winter/summer tires), etc.

Here, according to some embodiments, the environmental impact monitoring system 10 may also estimate the environmental impact associated with the subsequent item of goods 25 for the upcoming transport of the subsequent item of goods 25 further based on the obtained second set of variable environmental transport factors. This means, for example, that the environmental impact monitoring system 10 may use the obtained second set of variable environmental transport factors to determine which information associated with each performed transport of item of goods 24a-24x is to be selected and used for estimating the environmental impact of the future transportation of the subsequent item of goods 25.

In some embodiments, the environmental impact monitoring system 10 may further estimate one or more alternative environmental impacts associated with the subsequent item of goods 25 for the upcoming transport of said subsequent item of goods 25 based on the determined environmental impacts, the obtained first set of variable environmental transport factors, and the obtained second set of variable environmental transport factors, whereby said alternative environmental impacts is conditional on one or more transport restrictions or transport options for the upcoming transport of said subsequent item of goods 25. This means, for example, that while an estimated environmental impact associated with a subsequent item of goods 25 for an upcoming transport of the subsequent item of goods 25 may be estimated using the determined environmental impacts fulfilling the requirements to provide a fair and accurate environmental impact prediction for that particular transportation of the specific subsequent item of goods 25 as described above, a subset of the determined environmental impacts fulfilling the requirements to provide a fair and accurate environmental impact prediction for that particular transportation of the specific subsequent item of goods 25 based on certain conditions may here instead be used for the estimation of an alternative environmental impact. In other words, the environmental impact monitoring system 10 may determine different environmental impacts based on prompted or requested different transportation alternatives or options for a future transportation. For example, if a fossil-free emission criterion on the last mile delivery of the upcoming transportation of the specific subsequent item of goods 25 is specified, then the subset of the determined environmental impacts may be limited to transportations fulfilling that specific criterion, i.e. fulfilling the requirements to provide a fair and accurate environmental impact prediction for that particular transportation of the specific subsequent item of goods 25.

In some embodiments, the environmental impact monitoring system 10 may use a machine learning model that is trained to estimate the environmental impact and/or the one or more alternative environmental impacts associated with the subsequent item of goods 25 for the upcoming transport of said subsequent item of goods 25 based on the determined environmental impacts, the obtained first set of variable environmental transport factors, and the obtained second set of variable environmental transport factors. This means, for example, that determined environmental impacts and obtained variable environmental transport factors of previous transportations may be used to train an Al/Machine Learning, AI/ML, algorithm to predict environmental impacts of upcoming transportations of subsequent item of goods 25. Hence, in subsequent operation, upcoming transportations of subsequent item of goods 25 and its variable environmental transport factors may, for example, be used as input to the AI/ML algorithm, whereby the output of the AI/ML algorithm may be an estimate of environmental impact and/or alternative environmental impact associated with the subsequent item of goods 25 for the upcoming transport of said subsequent item of goods 25.

**Action 304.** Optionally, after the estimation in Action 303, the environmental impact monitoring system 10 may provide the estimated environmental impact associated with the subsequent item of goods 25 for the upcoming transport of said subsequent item of goods 25 to a user of a transportation ordering system 20. This means, for example, that the environmental impact monitoring system 10 may return the estimated environmental impact to be displayed to a user of the transportation ordering system 20 requesting the upcoming transport of said subsequent item of goods 25.

In some embodiments, e.g. in case the environmental impact monitoring system 10 estimated one or more alternative environmental impacts associated with the subsequent item of goods 25 for the upcoming transport of said subsequent item of goods 25 in Action 303, the environmental impact monitoring system 10 may further provide the estimated one or more alternative environmental impacts associated with the subsequent item of goods 25 for the upcoming transport of said subsequent item of goods 25 to a user of a transportation ordering system 20. This means, for example, that the environmental impact monitoring system 10 may further also return the estimated one or more alternative environmental impacts to be displayed to a user of the transportation ordering system 20 requesting the upcoming transport of said subsequent item of goods 25. Hence, the user of the transportation ordering system 20 may be provided with different options for the upcoming transport of said subsequent item of goods 25 with different environmental impacts.

In some embodiments, the environmental impact is represented by a carbon-dioxide, CO₂, or carbon-dioxide equivalent, CO₂e, indicator or emissions value. This means, for example, that the system 100 may established and assigned a well-defined and commonly relatable measurement of the environmental impact.

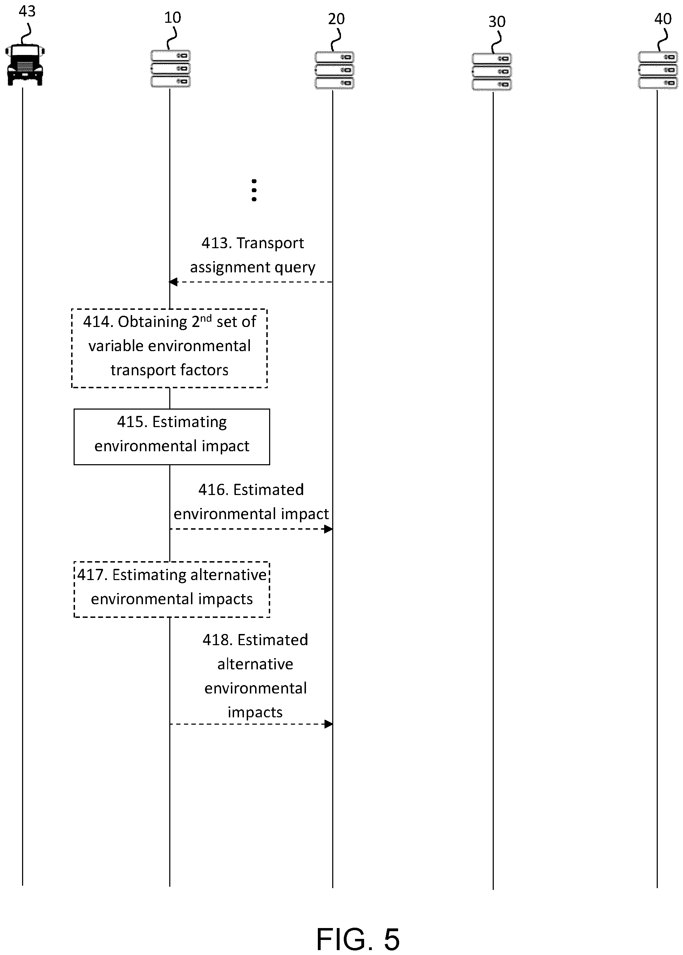

**Fig. 4-5** shows a signalling diagram illustrating an example of signalling in the system 100 shown in Fig. 1 according to some embodiments of the method described above.

In **Action 401,** the transport ordering system 20 transmits a transport assignment 24 to the transport assignment system 30. For example, a transport buyer assigns a transport assignment 24 to a carrier service.

In **Action 402,** the transport ordering system 20 also makes the transport assignment 24 available to the environmental impact monitoring system 10. For example, the transport ordering system 20 may automatically transmit the transport assignment 24 to the environmental impact monitoring system 10. Hence, the environmental impact system 10 may make the necessary configurations in order to be able to monitor the environmental impact associated with the transport assignment 24. The transport assignment 24 may comprise information, such as, for example, the weight and size of each item of goods 24a-24x, the total number of the item of goods 24a-24x, a type indication of each item of goods 24a-24x, a reference to the transport system 40 to which a transport order for the transport assignment 24 has been sent, and route information indicating the geographical location of the transport start/end location of the items of goods 24a-24x.

In **Action 403,** the transport assignment system 30 may accept and confirm the transport assignment to the transport ordering system 20. For example, the carrier service confirms the transport assignment to the transport buyer.

In **Action 404,** the transport assignment system 30 may optionally provide more detailed information regarding the execution of the transport assignment to both the environmental impact monitoring system 10, directly or via the transport ordering system 20. This information may, for example, comprise the transport order for the transport assignment 24, a vehicle type indication of the vehicle 44 that has been assigned to carry out the transport assignment 24, a fuel/energy type indication of the fuel/energy used by the vehicle 44 that has been assigned to carry out the transport assignment 24, start/stop times of the transport assignment 24, and route information indicating the geographical location of the start/end location of the transport assignment 24. Some of this information may also be provided by the transport system 40 as described below.

In **Action 405,** the transport assignment system 30 transmits a transport order to a transport system 40. For example, the carrier service orders trucking company to perform the actual physical transport of the items of goods 24a-24x according to the transport assignment 24.

In **Action 406,** the transport system 40 may accept and confirm the transport order to the transport assignment system 30. For example, the trucking company confirms the transport order to the carrier service.

In **Action 407,** the transport assignment system 30 may optionally provide more detailed information regarding the execution of the transport assignment to both the environmental impact monitoring system 10, directly or via the transport assignment system 30. This information may, for example, comprise the transport order for the transport assignment 24, a vehicle type indication of the vehicle 44 that has been assigned to carry out the transport assignment 24, a fuel/energy type indication of the fuel/energy used by the vehicle 44 that has been assigned to carry out the transport assignment 24, start/stop times of the transport assignment 24, and route information indicating the geographical location of the start/end location of the transport assignment 24.

In **Action 408,** the vehicle 44 transmits measured vehicle characteristics and operating data relating to the total energy consumption for the transport according to the transport order information received by the environmental impact monitoring system 10. This may be performed during and/or after performing the actual physical transport of the items of goods 24a-24x according to the transport assignment 24. Also, this may be performed directly to the environmental impact monitoring system 10 or via the transport system 40. This vehicle characteristics and operating data may, for example, comprise on-board measurement of the actual amount of fuel and/or energy that has been consumed by the vehicle 44 during the transport assignment 24, a fuel/energy type indication of the fuel/energy used by the vehicle 44, one or more time stamp events indicating starts/stops of the vehicle 44, and an on-board measurement of the actual distance that the vehicle 44 has travelled during the transport assignment 24.

In **Action 409,** the environmental impact monitoring system 10 assigns a part of the measured total energy consumption to each transported item of goods 24a-24x. This means, for example, that the information made available by the transport ordering system 20 in Action 402 for each transported item of goods 24a-24x and the measure total energy consumption actually consumed for the transportation of the transported items of goods 24a-24x may be combined in order to fairly share the measured total energy consumption between each transported item of goods 24a-24x.

In **Action 410,** the environmental impact monitoring system 10 associates an environmental impact to each transported item of goods 24a-24x based on the assigned part of the measured total energy consumption to each transported item of goods 24a-24x in Action 409.

In **Action 411,** the environmental impact monitoring system 10 may transmit a report regarding the environmental impact associated with each transported item of goods 24a-24x according to the transport assignment to the transport ordering system 20.

In **Action 412,** the environmental impact monitoring system 10 may further obtain a first set of variable environmental transport factors associated with the transport of the items of goods 24a-24x. For example, the location, altitude differences, traffic situations, routes, weather conditions, etc., concerning the transport that may have had an effect on the energy consumption of the vehicle 44 while performing the transport of the items of goods 24a-24x.

In **Action 413,** the transport ordering system 20 may transmit a transport assignment query to the environmental impact monitoring system 10. This may, for example, be a query requesting an estimated environmental impact for an upcoming transport of a subsequent item of goods 25.

Optionally, in **Action 414,** e.g. upon receiving the transport assignment query, the environmental impact monitoring system 10 may obtain a second set of variable environmental transport factors that may be associated with the upcoming transport of the subsequent item of goods 25. For example, the location, altitudes, expected traffic situations, possible routes, expected weather conditions, etc., concerning the upcoming transport that may affect the energy consumption of the vehicle 44 while performing the upcoming transport.

In **Action 415,** the environmental impact monitoring system 10 estimate an environmental impact associated with the upcoming transport of the subsequent item of goods 25. This is based on previously determined environmental impacts and first sets of variable environmental transport factors associated with previous transports. In case a second set of variable environmental transport factors was obtained in Action 414, then the environmental impact monitoring system 10 may estimate the environmental impact associated with the upcoming transport of the subsequent item of goods 25 further based on the second set of variable environmental transport factors.

In **Action 416,** the environmental impact monitoring system 10 may transmit a report regarding the estimated environmental impact associated with the upcoming transport of the subsequent item of goods 25 in response to the transport assignment query by the transport ordering system 20 in Action 413.

Optionally, in **Action 417,** the environmental impact monitoring system 10 may further estimate one or more alternative environmental impacts associated with the subsequent item of goods 25 for the upcoming transport of said subsequent item of goods 25. This may be performed simultaneously as the estimation in Action 415 and may be based on the determined environmental impacts and the obtained first set of variable environmental transport factors. The estimation may here also be based on the second set of variable environmental transport factors if obtained in Action 414. Here, the alternative environmental impacts may be conditional on one or more transport restrictions or transport options for the upcoming transport of said subsequent item of goods 25.

In **Action 418,** after the estimation in Action 417, the environmental impact monitoring system 10 may transmit a report regarding the estimated alternative environmental impact associated with the upcoming transport of the subsequent item of goods 25 in response to the transport assignment query by the transport ordering system 20 in Action 413. This may also be performed simultaneously and/or in conjunction with the reporting in Action 416.

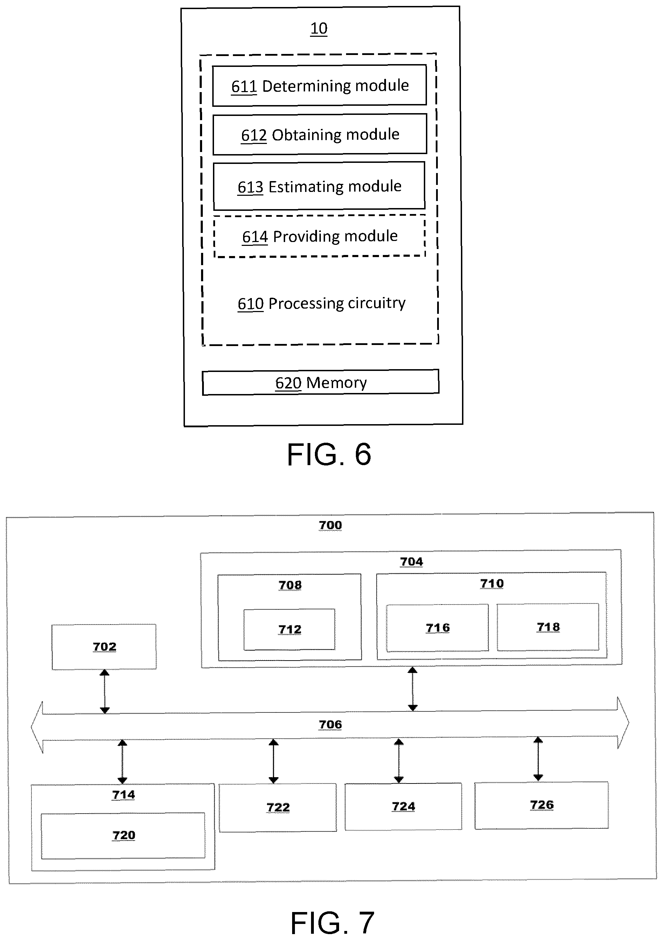

To perform the method actions for estimating an environmental impact of transporting items of goods 24a-24x, the environmental impact monitoring system 10 may comprise the following arrangement depicted in **FIG 6.** FIG 6 shows a schematic block diagram of embodiments of the environmental impact monitoring system 10. The embodiments of the environmental impact monitoring system 10 described herein may be considered as independent examples, or may be considered in any combination with each other to describe non-limiting examples. It should also be noted that, although not shown in FIG. 6, it should be noted that known conventional features of an environmental impact monitoring system 10, such as, for example, a connection to the mains, network connections (e.g. input/output ports, etc.), etc., may be assumed to be comprised in the environmental impact monitoring system 10 but is not shown or described any further in regards to FIG. 6. The environmental impact monitoring system 10 may comprise one or more centrally located or distributed network unit(s), wherein the environmental impact monitoring system 10 and the one or more network unit(s) may comprise **processing circuitry 610** and a **memory 620.** It should also be noted that some or all of the functionality described in the examples above as being performed by the environmental impact monitoring system 10 may be provided by the processing circuitry 610 executing instructions stored on a computer-readable medium, such as, the memory 620 shown in FIG. 6. The processing circuitry 610 may also comprise a **determining module 611,** an **obtaining module 612,** an **estimating module 613** and a **providing module 614,** each responsible for providing its functionality to support the examples described herein.

The environmental impact monitoring system 10 or processing circuitry 610 is configured to, or may comprise the determining 611 configured to, determine an environmental impact associated with each of a number of items of goods 24a-24x for a corresponding transport of said item of goods 24a-24x, wherein each environmental impact is based on a part of a total energy consumption of a vehicle 43 for the corresponding transport that has been assigned to said item of goods 24a-24x, and wherein the total energy consumption for each of the corresponding transports are measured by the vehicle 43 whilst carrying out the corresponding transports. Also, the environmental impact monitoring system 10 or processing circuitry 610 is also configured to, or may comprise the obtaining module 612 configured to, obtain a first set of variable environmental transport factors which impacted the total energy consumption by the vehicle 43 whilst carrying out each of the corresponding transports. Further, the environmental impact monitoring system 10 or processing circuitry 610 is configured to, or may comprise the estimating module 613 configured to, estimate an environmental impact associated with a subsequent item of goods 25 for an upcoming transport of said subsequent item of goods 25 based on the determined environmental impacts and the obtained first set of variable environmental transport factors.

In some embodiments, the environmental impact monitoring system 10 or processing circuitry 610 may be configured to, or may comprise the obtaining module 612 configured to, obtain a second set of variable environmental transport factors which will impact the total energy consumption by a vehicle 43 whilst carrying out the upcoming transport of said subsequent item of goods 25. In this case, the environmental impact monitoring system 10 or processing circuitry 610 may also be configured to, or may comprise the estimating module 613 configured to, estimate the environmental impact associated with the subsequent item of goods 25 for the upcoming transport of said subsequent item of goods 25 further based on the obtained second set of variable environmental transport factors.

In some embodiments, the environmental impact monitoring system 10 or processing circuitry 610 may be configured to, or may comprise the providing module 614 configured to, provide the estimated environmental impact associated with the subsequent item of goods 25 for the upcoming transport of said subsequent item of goods 25 to a user of a transportation ordering system 20.

In some embodiments, the environmental impact monitoring system 10 or processing circuitry 610 may be configured to, or may comprise the estimating module 613 configured to, estimate one or more alternative environmental impacts associated with the subsequent item of goods 25 for the upcoming transport of said subsequent item of goods 25 based on the determined environmental impacts, the obtained first set of variable environmental transport factors, and the obtained second set of variable environmental transport factors, whereby said alternative environmental impacts is conditional on one or more transport restrictions or transport options for the upcoming transport of said subsequent item of goods 25. Furthermore, the environmental impact monitoring system 10 or processing circuitry 610 may here also be configured to, or may comprise the providing module 614 configured to, provide the estimated one or more alternative environmental impacts associated with the subsequent item of goods 25 for the upcoming transport of said subsequent item of goods 25 to a user of a transportation ordering system 20.

According to some embodiments, the processing circuitry 510 may further be configured with a machine learning model that is trained to estimate the environmental impact and/or the one or more alternative environmental impacts associated with the subsequent item of goods 25 for the upcoming transport of said subsequent item of goods 25 based on the determined environmental impacts, the obtained first set of variable environmental transport factors, and the obtained second set of variable environmental transport factors.

Additionally, according to some embodiments, the first and second set of variable environmental transport factors may comprise one or more of: one or more geography or topography factors relating to the route travelled by the vehicle 43 whilst carrying out each of the corresponding transports, an amount of traffic on the route travelled by the vehicle 43 whilst carrying out each of the corresponding transports, one or more factors relating to the current weather on the route travelled by the vehicle 43 whilst carrying out each of the corresponding transports, and one or more factors related to the timing or date whilst carrying out each of the corresponding transports. Also, in some embodiments, the environmental impact may be represented by a carbon-dioxide, CO₂, or carbon-dioxide equivalent, CO₂e, indicator or emissions value.

Furthermore, the embodiments for estimating an environmental impact of transporting items of goods 24a-24x described above may be implemented through one or more processors, such as the processing circuitry 310 in the environmental impact monitoring system 10 depicted in FIG. 3, together with computer program code for performing the functions and actions of the examples herein. The program code mentioned above may also be provided as a computer program product, for instance in the form of a data carrier carrying computer program code or code means for performing the examples herein when being loaded into the processing circuitry 310 in the environmental impact monitoring system 10. The computer program code may e.g. be provided as pure program code in the network environmental impact monitoring system 10 or on a server and downloaded to the environmental impact monitoring system 10. Thus, it should be noted that the modules of the environmental impact monitoring system 10 may in some examples be implemented as computer programs stored in memory, e.g. in the memory modules 320 in FIG. 3, for execution by processors or processing modules, e.g. the processing circuitry 310 of FIG. 3. Those skilled in the art will also appreciate that the processing circuitry 310 and the memory 320 described above may refer to a combination of analog and digital circuits, and/or one or more processors configured with software and/or firmware, e.g. stored in a memory, that when executed by the one or more processors such as the processing circuitry 310 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processor device **702** (may also be referred to as a control unit), a memory **704,** and a system bus **706.** The computer system **700** may include at least one computing device having the processor device **702.** The system bus **706** provides an interface for system components including, but not limited to, the memory **704** and the processor device **702.** The processor device **702** may include any number of hardware components for conducting data or signal processing or for executing computer code stored in memory **704.** The processor device **702** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logc, discrete hardware components, or any combination thereof designed to perform the functions described herein. The processor device may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processor device **702** (e.g., via a circuit or any other wired, wireless, or network connection) and may include computer code for executing one or more processes described herein. The memory **704** may include non-volatile memory **705** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with a processor device **702.** A basic input/output system (BIOS) **712** may be stored in the non-volatile memory **705** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **714** and/or in the volatile memory **710,** which may include an operating system **716** and/or one or more program modules **715.** All or a portion of the examples disclosed herein may be implemented as a computer program product **720** stored on a transitory or non-transitory computer-usable or computer-readable storage medium (e.g., single medium or multiple media), such as the storage device **714,** which includes complex programming instructions (e.g., complex computer-readable program code) to cause the processor device **702** to carry out the steps described herein. Thus, the computer-readable program code can comprise software instructions for implementing the functionality of the examples described herein when executed by the processor device **702.** The processor device **702** may serve as a controller or control system for the computer system **700** that is to implement the functionality described herein.

The computer system **700** also may include an input device interface **722** (e.g., input device interface and/or output device interface). The input device interface **722** may be configured to receive input and selections to be communicated to the computer system **700** when executing instructions, such as from a keyboard, mouse, touch-sensitive surface, etc. Such input devices may be connected to the processor device **702** through the input device interface **722** coupled to the system bus **706** but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may also include a communications interface **726** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

According to some additional examples, a control system comprising one or more control units configured to perform the method according to any of the examples described above is also provided.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method for estimating an environmental impact of transporting items of goods (24a-24x), wherein the method comprises:
*determining* (301; 401-410) an environmental impact associated with each of a number of items of goods (24a-24x) for a corresponding transport of said item of goods (24a-24x), wherein each environmental impact is based on a part of a total energy consumption of a vehicle (43) for the corresponding transport that has been assigned to said item of goods (24a-24x), and wherein the total energy consumption for each of the corresponding transports are measured by the vehicle (43) whilst carrying out the corresponding transports,
*obtaining* (302; 411) a first set of variable environmental transport factors which impacted the total energy consumption by the vehicle (43) whilst carrying out each of the corresponding transports; and
*estimating* (303; 415) an environmental impact associated with a subsequent item of goods (25) for an upcoming transport of said subsequent item of goods (25) based on the determined environmental impacts and the obtained first set of variable environmental transport factors.

2. The method according to claim 1, further comprising
*obtaining* (414) a second set of variable environmental transport factors which is estimated to impact the total energy consumption by a vehicle (43) whilst carrying out the upcoming transport of said subsequent item of goods (25); and
*estimating* (415) the environmental impact associated with the subsequent item of goods (25) for the upcoming transport of said subsequent item of goods (25) further based on the obtained second set of variable environmental transport factors.

3. The method according to claim 1 or 2, further comprising
*providing* (304; 416) the estimated environmental impact associated with the subsequent item of goods (25) for the upcoming transport of said subsequent item of goods (25) to a user of a transportation ordering system (20).

4. The method according to any of claims 1-3, further comprising
*estimating* (417) one or more alternative environmental impacts associated with the subsequent item of goods (25) for the upcoming transport of said subsequent item of goods (25) based on the determined environmental impacts, the obtained first set of variable environmental transport factors, and the obtained second set of variable environmental transport factors, whereby said alternative environmental impacts is conditional on one or more transport restrictions or transport options for the upcoming transport of said subsequent item of goods (25).

5. The method according to claim 4, further comprising
*providing* (418) the estimated one or more alternative environmental impacts associated with the subsequent item of goods (25) for the upcoming transport of said subsequent item of goods (25) to a user of a transportation ordering system (20).

6. The method according to any of claims 1-5, wherein a machine learning model is trained to estimate the environmental impact and/or the one or more alternative environmental impacts associated with the subsequent item of goods (25) for the upcoming transport of said subsequent item of goods (25) based on the determined environmental impacts, the obtained first set of variable environmental transport factors, and the obtained second set of variable environmental transport factors.

7. The method according to any of claims 1-6, wherein the first and second set of variable environmental transport factors comprise one or more of:
- one or more geography or topography factors relating to the route travelled by the vehicle (43) whilst carrying out each of the corresponding transports,
- an amount of traffic on the route travelled by the vehicle (43) whilst carrying out each of the corresponding transports,
- one or more factors relating to the current weather on the route travelled by the vehicle (43) whilst carrying out each of the corresponding transports, and
- one or more factors related to the timing or date whilst carrying out each of the corresponding transports.

8. The method according to any of claims 1-7, wherein the environmental impact is represented by a carbon-dioxide, CO₂, or carbon-dioxide equivalent, CO₂e, indicator.

9. An environmental impact monitoring system (10) for estimating an environmental impact of transporting items of goods (24a-24x), wherein the environmental impact monitoring system (10) comprising a processing circuitry (510) and a memory (520), wherein the processing circuitry (510) configured to
determine an environmental impact associated with each of a number of items of goods (24a-24x) for a corresponding transport of said item of goods (24a-24x), wherein each environmental impact is based on a part of a total energy consumption of a vehicle (43) for the corresponding transport that has been assigned to said item of goods (24a-24x), and wherein the total energy consumption for each of the corresponding transports are measured by the vehicle (43) whilst carrying out the corresponding transports, obtain a first set of variable environmental transport factors which impacted the total energy consumption by the vehicle (43) whilst carrying out each of the corresponding transports, and estimate an environmental impact associated with a subsequent item of goods (25) for an upcoming transport of said subsequent item of goods (25) based on the determined environmental impacts and the obtained first set of variable environmental transport factors.

10. The environmental impact monitoring system (10) according to claim 9, wherein the processing circuitry (510) is further configured to obtain a second set of variable environmental transport factors which will impact the total energy consumption by a vehicle (43) whilst carrying out the upcoming transport of said subsequent item of goods (25), and estimate the environmental impact associated with the subsequent item of goods (25) for the upcoming transport of said subsequent item of goods (25) further based on the obtained second set of variable environmental transport factors.

11. The environmental impact monitoring system (10) according to claim 9 or 10,
wherein the processing circuitry (510) is further configured to provide the estimated environmental impact associated with the subsequent item of goods (25) for the upcoming transport of said subsequent item of goods (25) to a user of a transportation ordering system (20).

12. The environmental impact monitoring system (10) according to any of claims 9-11, wherein the processing circuitry (510) is further configured to estimate one or more alternative environmental impacts associated with the subsequent item of goods (25) for the upcoming transport of said subsequent item of goods (25) based on the determined environmental impacts, the obtained first set of variable environmental transport factors, and the obtained second set of variable environmental transport factors, whereby said alternative environmental impacts is conditional on one or more transport restrictions or transport options for the upcoming transport of said subsequent item of goods (25).

13. The environmental impact monitoring system (10) according to claim 12, wherein the processing circuitry (510) is further configured to provide the estimated one or more alternative environmental impacts associated with the subsequent item of goods (25) for the upcoming transport of said subsequent item of goods (25) to a user of a transportation ordering system (20).

14. The environmental impact monitoring system (10) according to any of claims 9-13, wherein the processing circuitry (510) is further configured with a machine learning model that is trained to estimate the environmental impact and/or the one or more alternative environmental impacts associated with the subsequent item of goods (25) for the upcoming transport of said subsequent item of goods (25) based on the determined environmental impacts, the obtained first set of variable environmental transport factors, and the obtained second set of variable environmental transport factors.

15. A computer program product comprising program code means for performing the steps of any of claims 1-8 when said program is run on a computer or on a processing circuitry (610) of an environmental impact monitoring system (10).

16. A non-transitory computer-readable storage medium comprising instructions, which when executed on a processing circuitry (610), cause the processing circuitry (610) to perform the method of any of claims 1-8.
